# EUROPEAN PATENT APPLICATION

(11) **EP 1 788 780 A2**
(43) Date of publication of application: **23.05.2007**
(21) Application number: 06394022.5
(22) Date of filing: 16.11.2006
(51) Int. Cl.: H04L 29/06, H04M 7/00

(54) **A message interworking gateway**

(30) Priority: 17.11.2005 US 737394 P
(71) Applicant: Markport Limited, Dublin 1 (IE)
(72) Inventor: Brouwer, Sander, 4254 GE Sleeuwijk NB (NL); Keijzer, Pieter, 3404 HK IJsselstein (NL); van Wingerde, Gertjan, 7544 TX Enschede OV (NL)
(74) Representative: Weldon, Michael James

(57) **Abstract**

A message interworking gateway (1) resides in an overlay IMS network (2) associated with a home SS7 network (10). The gateway (1) intercepts requests for routing information (MAP-SRIs) from either the home SMSC (11) or a foreign SMSC. If the message recipient is available on the IMS overlay network (2) the gateway (1) performs protocol translation AND routes the translated message to the recipient. If not, the gateway returns the SRI to the home (10) network. The gateway operates without updating the home HLR (12) with user presence data and hence voice traffic can be kept on circuit switched technology without being routed to the IMS overlay network (2).

## Description

### INTRODUCTION

### Field of the Invention

The invention relates to a gateway for interworking between circuit switched PLMN networks and IMS overlay networks for message communication.

### Prior Art Discussion

WO03/103308 (Markport Ltd) describes an IP-to-PLMN gateway in which enhanced service functions in a PLMN are carried over into the messaging service available in the IP domain.

US6611516 (Nokia) describes a gateway which allows roaming between a PLMN network and a MIPIN with dynamic mapping. This gateway updates one of the existing locations (such as MSC location) in the HLR in order to relay SMS traffic from the circuit switched domain to the IP domain. This approach however implies that other functions performed by the MSC need to be handled as well from the circuit switched network perspective, where the most important function is handling a voice call set up. This gateway also has to handle voice call set-ups destined to that subscriber. In the IP domain, a voice call can only be set up using Voice-over-IP techniques, such as SIP/RTP. Although for a fixed IMS network this is not a problem, for mobile IMS networks Voice-over-IP is not desirable for the following reasons:
- Mobile IP networks have difficulty guaranteeing the required QoS required for voice traffic, resulting in a bad quality voice call. Examples of QoS problems include high packet loss rates, contention, and unpredictable latencies.
- The pricing model associated with mobile IP core network elements (SGSN, GGSN) is prohibitive for cost-effective Voice-over-IP calls compared to circuit switched calls.
- The battery life of a mobile phone is decreased significantly when using Voice-over-IP for voice calls.

For the above reasons, mobile operators typically want to keep voice calls on the circuit switched PLMN network while the subscriber is under this coverage.

An object of the invention is to provide an improved gateway for routing of mobile terminated messages between circuit switched PLMN and IMS (IP-based) networks with avoidance of significant modification or upgrade of existing network elements.

Another objective is to make IMS applications accessible through SMS.

A further objective is to achieve more versatile interworking without a requirement for routing voice calls in the same manner as messages.

Glossary
BSC: base station controller
HLR: home location register
HSS: home subscriber server
IMS: internet protocol multimedia subsystem
IMS overlay network: An IMS overlay network is a SIP-based network that acts as an overlay network for another network. IMS overlay networks are formally described by the 3GPP: 3rd Generation Partnership Project. (see 3GPP TS 22.228 & TS 23.228)
IP: Internet Protocol
MAP: Mobile Application Part
MSC: mobile switching centre
MSISDN: mobile subscriber ISDN number
PLMN: public land mobile network
QoS: quality of service
RTP: real-time transport protocol
SCCP: signalling connection control part
S-CSCF: serving call session control function
SGSN: serving GPRS support node
SIP: session initiation protocol
SMS: short message service
SMSC: short message service centre
SRI: Send Routing Information
SS7: signalling system 7
STP: signal transfer point

### SUMMARY OF THE INVENTION

According to the invention, there is provided a method of performing message interworking between on one side an IMS overlay network and on the other side a circuit switched PLMN home network associated with said IMS overlay network or a circuit switched PLMN foreign network, the method comprising the steps of:
intercepting a routing request sent by a sender SMSC in the foreign network or in the home network, the routing request concerning a recipient potentially available on the IMS overlay network, the recipient being a user device or an IMS application;
a gateway processing the intercepted routing request and determining accordingly if the recipient is available on the IMS overlay network;
if the recipient is not available on the IMS overlay network, the gateway returning the intercepted routing request to the home network; and
if the recipient is available on the IMS overlay network, the gateway responding to the intercepted routing request, and subsequently receiving a message for the recipient, performing protocol conversion, and delivering a converted message to the recipient in the IMS network.

In one embodiment, the gateway communicates with the home network or the foreign network without updating a HLR of the home network.

In one embodiment, the gateway communicates with the home network or the foreign network at the SS7 level.

In one embodiment, the routing request is intercepted by altering an original routing request, and the gateway receiving the altered routing request and undoing the alteration if the routing request is to be returned to the home network.

In one embodiment, said alteration is alteration of a network routable address.

In one embodiment, one or more characters are added to an SCCP CdPA after an E.164 country code.

In one embodiment, the request is altered by altering a translation type of the original routing request.

In another embodiment, an element in the home network alters the routing request and directs the altered routing request to the gateway.

In one embodiment, the element is an STP in the home network.

In one embodiment, the gateway responds to the intercepted routing request by inserting an address of the gateway as an MSC parameter or an SGSN parameter in a response message.

In a further embodiment, the gateway sends a circuit switched PLMN network acknowledgement to the sender SMSC after delivering or attempting delivery of the message in the IMS overlay network.

In one embodiment, the gateway determines dynamically in response to receiving the intercepted routing request if the recipient is registered in the IMS overlay network by querying the IMS overlay network.

In one embodiment, the gateway queries a HSS of the IMS overlay network.

In another embodiment, the gateway queries a presence server of the IMS overlay network.

In a further embodiment, the gateway queries an S-CSCF of the IMS overlay network.

In one embodiment, the gateway maintains subscriber IMS overlay network coverage data in a database.

In one embodiment, the gateway receives coverage data in the form of a notification of a user device or an IMS application being available on the IMS overlay network, and informs at least one SMSC by sending an alert message to trigger delivery of messages pending.

In one embodiment, the gateway holds a list of one or more SMSCs and transmits said alert message to SMSCs in said list. Said list may be pre-configured or dynamically maintained.

In one embodiment, said list is dynamically maintained by the gateway monitoring delivery status reports sent by an SMSC to a HLR.

In one embodiment, the gateway receives said notification in the form of a SIP register message.

In another aspect, the invention provides a message interworking gateway comprising means for performing gateway operations of any method as defined above.

The invention also provides a computer readable medium comprising software code for performing operations of any method as defined above when executing on a digital processor.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a block diagram showing a gateway of the invention and the network elements with which it is connected; and
Figs. 2 to 9 are message transfer diagrams showing how the gateway operates in various modes.

### Description of the Embodiments

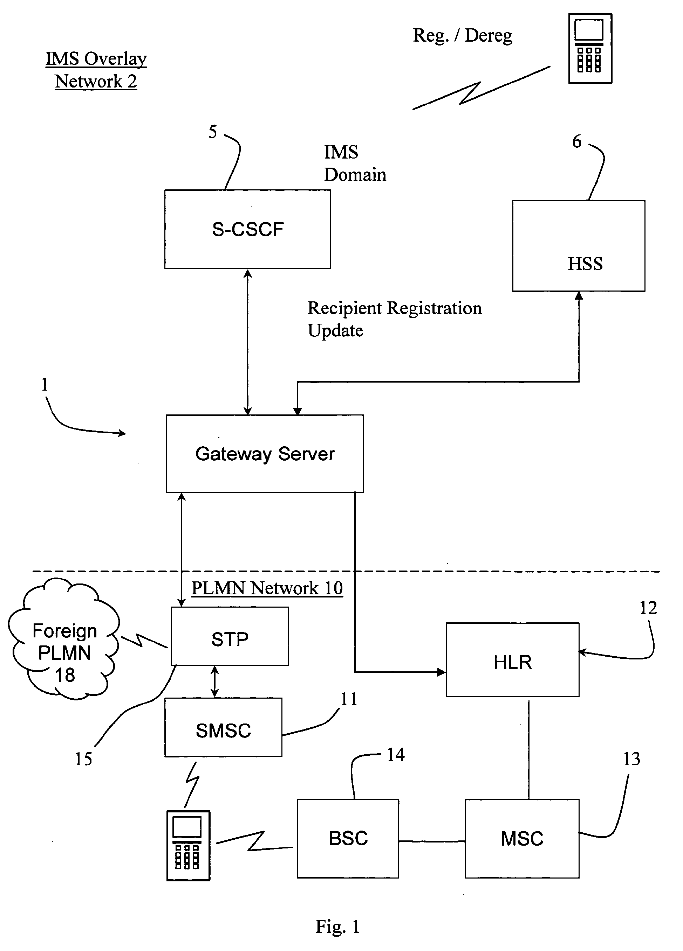

Referring to Fig. 1 a gateway 1 resides in an IMS overlay network 2. The gateway 1 communicates with an S-CSCF 5 and a HSS server 6 in the IMS domain. The gateway 1 also communicates with an SMSC 11 and a HLR 12 in an SS7 switched circuit PLMN network 10. The HLR 12 communicates with an MSC 13, which in turn communicates with a BSC 14 as is conventional. The home network 10 includes an STP 15, which communicates with foreign SS7 PLMN networks (18) and with the gateway 1.

The network 10 is a home network to the IMS overlay network 2, and is referred to henceforth as the "home network".

In summary, the gateway 1 resides in the overlay IMS network 2 associated with the home network 10. The gateway 1 intercepts requests for routing information (MAP-SRIs) from either the home SMSC 11 or a foreign SMSC. If the message recipient is available on the IMS overlay network 2 the gateway 1 performs protocol translation and routes the translated message to the recipient. If not, the gateway returns the SRI to the home network 10. The gateway operates without updating the home HLR 12 with user presence data, and hence voice traffic can be kept in the circuit switched (PLMN) domain without being routed to the IMS overlay network 2.

The gateway has access to the HSS 6, although in other embodiments this may alternatively be any other database with provisioned IMS subscribers, containing relevant subscriber details for messaging in the SS7 domain and in the IMS domain and has access to network presence status of subscribers.

The gateway 1 does not impose changes to the specifications/interfaces of existing network components, and so no software upgrades are required on existing network components.

The following are examples illustrating operation of the gateway 1.

Handling an SMS Mobile Terminated delivery attempt.

Typically subscribers who bought an IMS capable mobile phone will continue to use their existing mobile number. As a result no separate address range can be assigned to subscribers migrated to IMS. Consequently, when a foreign SMSC sends a Mobile Terminated SMS to the home network 10, the gateway 1 intercepts the request for routing information sent by the sending SMSC. This is done in the network (e.g. through Global Title Translation) by altering the network routable address in the Request for Routing information such that the Request for Routing information is routed to the gateway 1. The gateway is capable of undoing the performed alteration of the network routable address (e.g. where the subscriber is not provisioned/not reachable on the IMS overlay network). An example of a reversible alteration of the network routable address is to insert an additional digit in the SCCP CdPA after the E.164 country code. Another example is setting the translation type to a different value from that originally set.

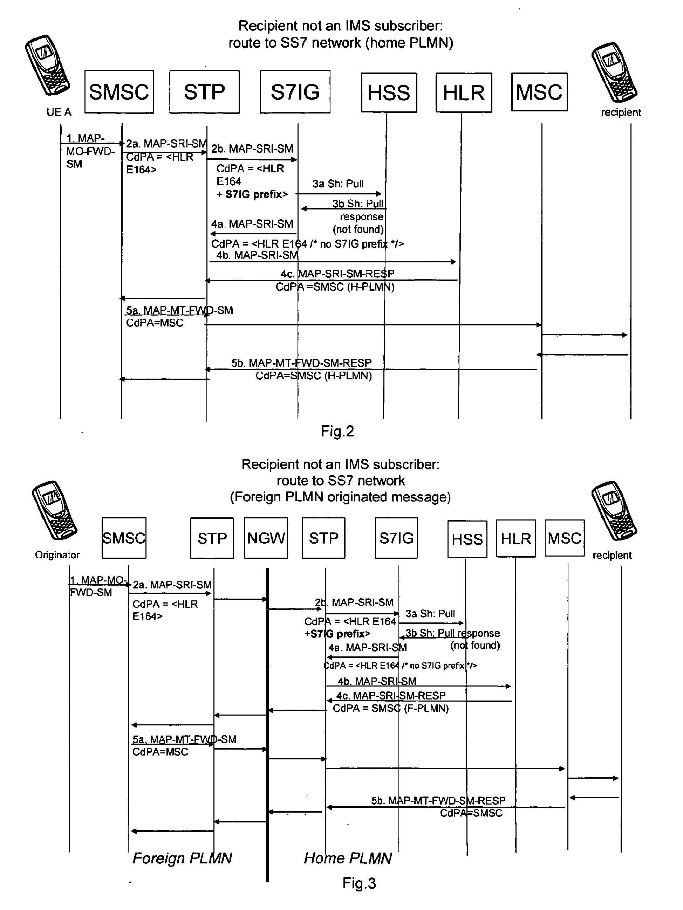

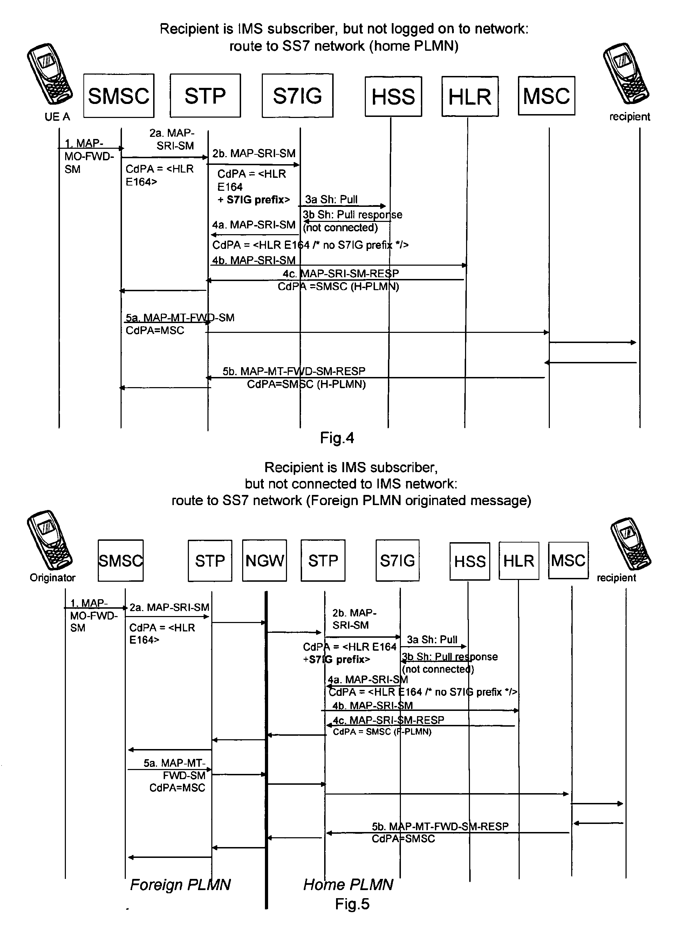

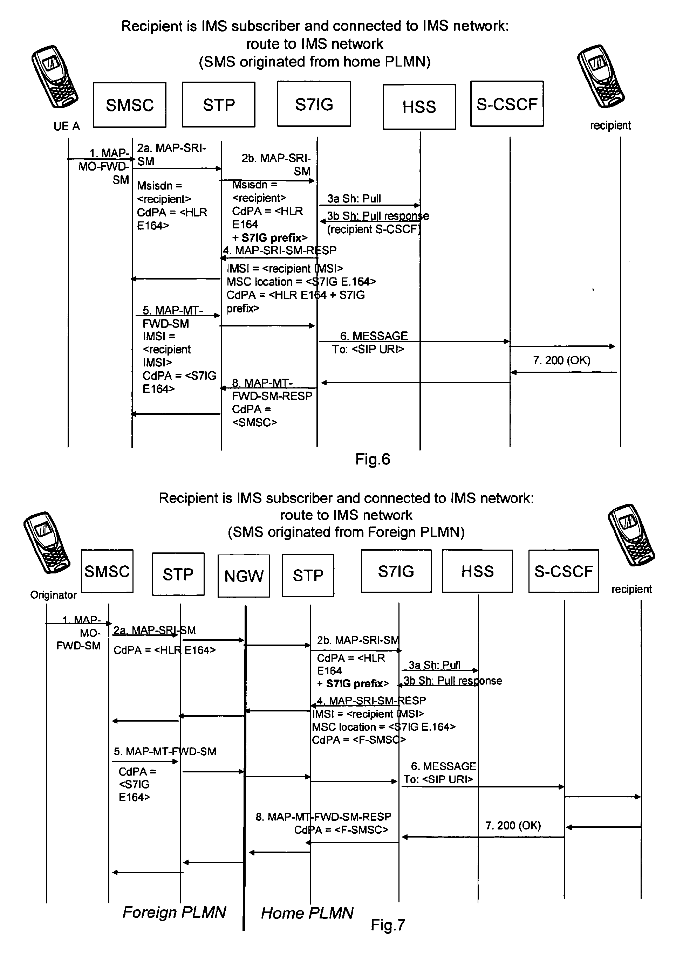

The following scenarios can apply when the gateway receives a request for routing information:
A) SMS message sent from home SMSC and the recipient is not an IMS subscriber (Fig. 2).
   The scenario where the recipient is not an IMS subscriber will initially be the most likely scenario. The home SMSC 11 sends out a request for routing information (step 2a) through the STP 15 with a network routable address associated with the HLR 12 of the recipient. In step 2b, the STP 15 modifies the network routable address to redirect the request for routing information to the gateway 1 by inserting more digits in the network routable address. An alternative approach involves setting the Translation Type to a different value from that originally set.
   In step 3a, the gateway 1 checks whether the recipient is provisioned as an IMS subscriber by sending a Sh pull to the HSS 6. The HSS 6 will respond with a negative Sh Pull response (step 3b) indicating that the subscriber is not provisioned in the IMS network 2.
   In Step 4a the gateway 1 undoes the changes made to the network routable address by the STP, removing the previously inserted digits or by resetting the Translation Type as appropriate. It then forwards the request for routing information on to the STP 15, which will in turn route the request for routing information to the HLR (step 4b).
   In the remaining steps 4c to 5b (response returned by HLR, message delivery attempt to MSC, message delivery attempt to subscriber, MSC response back to SMSC) the normal SMS signalling flow is followed as described in the applicable SMS standards (See 3GPP TS23.040, TS24.011, and TS29.002 and/or TIA-EIA-41/ANSI-41, and 3GPP2 X.S0004-540-E).
B) SMS message sent from foreign SMSC to the home network 10 and the recipient is not an IMS subscriber (Fig. 3).
   The scenario where the recipient is not an IMS subscriber will initially be the most likely scenario. The foreign network SMSC sends out a request for routing information (step 2a) through the foreign network STP with a network routable address associated with the home HLR 12 recipient. As the network routable address contains the National Destination Code of the home PLMN 10, the request for routing information is routed to a National Gateway, which in turn routes it to the STP 15 of the home network 10. In step 2b, the home network STP 15 modifies the network routable address as described above to redirect the request for routing information to the gateway 1.
   In step 3a, the gateway 1 checks whether the recipient is provisioned as an IMS subscriber by sending a Sh pull to the HSS 6. The HSS 6 responds with a negative Sh Pull response (step 3b) indicating that the subscriber is not provisioned in the IMS network.
   In Step 4a the gateway 1 undoes the changes made to the network routable address by the STP, and forwards the request for routing information on to the STP 15, which in turn routes the request for routing information to the HLR 12 (step 4b).
   In the remaining steps 4c to 5b (response returned by HLR, message delivery attempt to MSC, message delivery attempt to subscriber, MSC response back to SMSC) the normal SMS signalling flow is followed as described in the applicable SMS standards (See 3GPP TS23.040, TS24.011, and TS29.002 and/or TIA-EIA-41/ANSI-41, and 3GPP2 X.S0004-540-E).
C) SMS message sent from the home SMSC 11, the recipient is an IMS subscriber but the recipient is not connected to the IMS network (Fig. 4)
   The scenario where the IMS recipient is not connected to the IMS network but is still reachable through circuit switched SMS may occur when the IMS subscriber moves outside IMS coverage (such as outside city areas), or for example in the case of roaming abroad.
   The SMSC 11 sends out a request for routing information (step 2a) through the STP 15 with a network routable address associated with the HLR of the recipient. In step 2b, the STP 15 modifies as described above the network routable address to redirect the request for routing information to the gateway 1.
   In step 3a, the gateway 1 checks whether the recipient is provisioned as an IMS subscriber by sending a Sh pull to the HSS 6. The HSS 6 will respond with a negative Sh Pull response (step 3b) indicating that the subscriber is not connected to the IMS network 2.
   In Step 4a the gateway 1 undoes the changes made to the network routable address by the STP, and forwards the request for routing information on to the STP, which will in turn route the request for routing information to the HLR (step 4b).
   In the remaining steps 4c to 5b (response returned by HLR, message delivery attempt to MSC, message delivery attempt to subscriber, MSC response back to SMSC) the normal SMS signalling flow is followed as described in the applicable SMS standards (See 3GPP TS23.040, TS24.011, and TS29.002 and/or TIA-EIA-41/ANSI-41, and 3GPP2 X.S0004-540-E).
D) SMS message sent from foreign SMSC, the home PLMN recipient is an IMS subscriber but the recipient is not connected to the home PLMN IMS network (Fig. 5).
   The scenario where the recipient is not connected to the IMS network but is still reachable through circuit switched SMS may occur when the IMS subscriber moves outside IMS coverage (such as outside city areas), or for example in the case of roaming abroad.
   The foreign network SMSC sends out a request for routing information (step 2a) through the foreign network STP with a network routable address associated with the home HLR 12. As the network routable address contains the National Destination Code of the home PLMN, the request for routing information is routed to a National Gateway, which in turn routes it to the STP 15 of the home network 10. In step 2b, the STP 15 modifies as described above the network routable address to redirect the request for routing information to the gateway 1.
   In step 3a, the gateway 1 checks whether the recipient is provisioned as an IMS subscriber by sending a Sh pull to the HSS 6. The HSS 6 responds with a negative Sh Pull response (step 3b) indicating that the subscriber is not connected to the IMS network.
   In Step 4a the gateway 1 undoes the changes made to the network routable address by the STP, and forwards the request for routing information on to the STP, which will in turn route the request for routing information to the HLR (step 4b).
   In the remaining steps 4c to 5b (response returned by HLR, message delivery attempt to MSC, message delivery attempt to subscriber, MSC response back to SMSC) the normal SMS signalling flow is followed as described in the applicable SMS standards (See 3GPP TS23.040, TS24.011, and TS29.002 and/or TIA-EIA-41/ANSI-41, and 3GPP2 X.S0004-540-E).
E) SMS message sent from home SMSC 11, the recipient is an IMS subscriber and the recipient is connected to the IMS network 2 (Fig. 6).
   The home SMSC 11 sends out a request for routing information (step 2a) through the STP 15 with a network routable address associated with the HLR 12 of the recipient. In step 2b, the STP 15 modifies as described above the network routable address to redirect the request for routing information to the gateway 1.
   In step 3a, the gateway 1 checks whether the recipient is provisioned as an IMS subscriber by sending a Sh pull to the HSS 6. The HSS 6 responds with a positive Sh Pull response (step 3b) indicating that the subscriber is connected to the IMS network 2. Through information retrieved from the HSS 6, the gateway 1 is able to map the E.164 number of the recipient onto a SIP URI. Alternatively, the gateway 1 may use a mapping database to map the E.164 number of the recipient onto a SIP URI.
   In Step 4, the gateway 1 sends a request for routing information response with the E.164 address of the gateway 1 filled in as destination MSC parameter, which is routed through the STP 15 which in turn routes the response to the home SMSC 11. The IMSI field in the routing information response contains either the real IMSI, or a constructed IMSI containing the E.164 number of the recipient, or a constructed IMSI containing a reference number that allows the gateway 1 to insert the E.164 number of the recipient into the message, through a lookup into its internal administration using the reference number as the search key. In step 5 the home SMSC 11 forwards the actual short message to the gateway 1. In Step 6 the gateway 1 performs protocol conversion and sends the message onto the IMS network 2 using a SIP Message. The gateway 1 performs address mapping from MSISDN (E164) / IMSI (E.212) to SIP URI if required by the IMS network through a local mapping database or through the use of the constructed IMSI described in step 4. Alternatively the gateway may construct a TEL URI from the E.164 number or construct a SIP URI containing the E.164 number as the username (e.g. 316123456@operator.com).
   In step 7 the gateway 1 receives a response from the IMS network and sends the corresponding SS7 acknowledgement (step 8) back to the sending SMSC 11 after the result of the delivery attempt to the IMS recipient is known.
F) SMS message sent from foreign SMSC, the recipient is an IMS subscriber and the recipient is connected to the IMS network (Fig. 7).
   The foreign network SMSC sends out a request for routing information (step 2a) through the foreign network STP with a network routable address associated with the HLR 12 of the home PLMN recipient. As the network routable address contains the National Destination Code of the home PLMN, the request for routing information is routed to a National Gateway, which in turn routes it to the STP 15 of the home network 10. In step 2b, the STP 15 modifies as described above the network routable address to redirect the request for routing information to the gateway 1.
   In step 3a, the gateway 1 checks whether the recipient is provisioned as an IMS subscriber by sending a Sh pull to the HSS 6. The HSS 6 responds with a positive Sh Pull response (step 3b) indicating that the subscriber is connected to the IMS network 2. Through information retrieved from the HSS, the gateway 1 is able to map the E.164 number of the recipient onto a SIP URI. Alternatively, the gateway 1 may use a mapping database to map the E.164 number of the recipient onto a SIP URI:
   In Step 4, the gateway 1 sends a request for routing information response with the E.164 address of the gateway filled in as destination MSC parameter, which is routed through the STP 15 which in turn routes the response through the National Gateway to the foreign SMSC. The IMSI field in the routing information response contains either the real IMSI, or a constructed IMSI containing the E.164 number of the recipient or a constructed IMSI containing a reference number that allows the gateway 1 to insert the E.164 number of the recipient into the message, through a lookup into its internal administration using the reference number as the search key. In step 5 the foreign SMSC will forward the actual short message through the National Gateway to the gateway 1. In Step 6 the gateway 1 performs protocol conversion and sends the message onto the IMS network using a SIP Message. The gateway 1 performs address mapping from MSISDN (E164) / IMSI (E.212) to SIP URI if required by the IMS network through the mapping database or through the use of the constructed IMSI described in step 4. Alternatively the gateway may construct a TEL URI from the E.164 number or construct a SIP URI containing the E.164 number as the username (e.g. 316123456@operator.com).
   In step 7 the gateway 1 receives a response from the IMS network and will send the corresponding SS7 acknowledgement (step 8) back to the sending SMSC after the result of the delivery attempt to the IMS recipient is known.

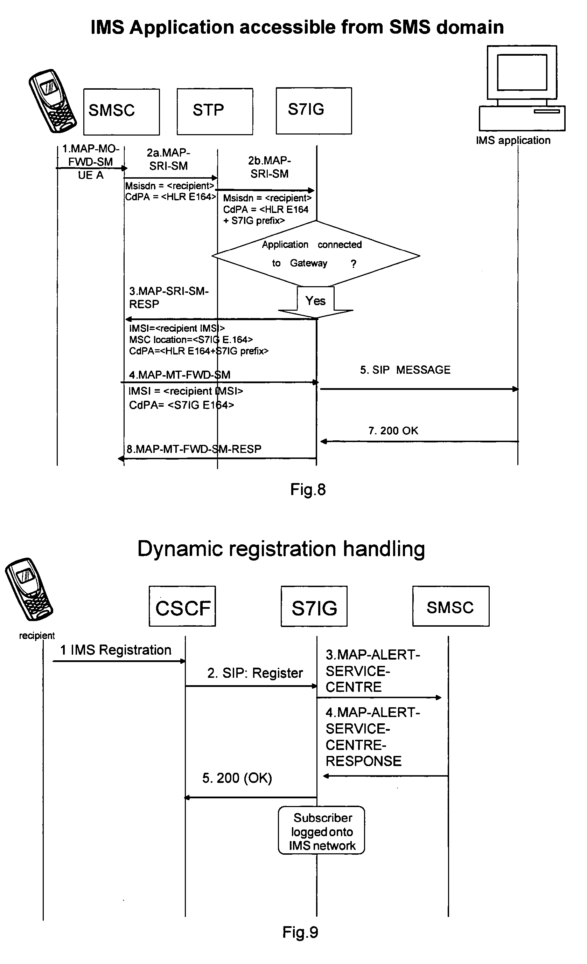

### Accessing IMS applications from SMS domain (Fig. 8):

The gateway is also capable of making IMS applications accessible through SMS, by letting the IMS application be addressable through a routable E164 address.

The IMS application is connected to the gateway 1 with a specific application access protocol such as SIP, MM7 or SMPP. Again the gateway 1 answers the request for routing information with the E.164 address of the gateway filled in as destination MSC parameter. Subsequently the sending SMSC forwards the actual short message to the gateway. The gateway 1 performs protocol conversion to deliver the message to the IMS application, and sends the corresponding SS7 acknowledgement back to the sending SMSC after the result of the delivery attempt to the IMS application is known. This is illustrated in Fig. 8.

For illustrative purposes the flow in Fig. 8 depicts a sending SMSC in the home network, however the invention also supports making IMS applications accessible through SMS where the sending SMSC is in a foreign network.

Where the recipient is an IMS application the gateway 1 operates in a very similar manner to the preceding embodiments (where the recipient is a user device), with the only substantial difference being that the protocol conversion (including address mapping) is determined by the application access protocol involved.

### Triggering a delivery attempt on IMS recipient being available (Fig. 9):

In the above examples the gateway 1 dynamically determines coverage data concerning presence of subscribers in the IMS overlay network 2. However, it may alternatively be notified by the IMS overlay network 2 if a user registers onto the IMS network 2. The gateway 1 subsequently informs the SMSC by sending an Alert message that will trigger the delivery of pending messages for the registered user. Also, the gateway may maintain this information as coverage data in a dynamic coverage database. Reference to this database avoids the need for steps 3a and 3b in Figs. 2 to 7. The SMSC may be in a foreign network or the home network.

Similarly, the IMS network 2 notifies the gateway 1 if a user de-registers from the IMS network. The gateway 1 may remove the user's presence information from dynamic coverage database once it receives the deregistration information from the IMS network 2.

The gateway 1 subsequently may use the dynamic coverage database to determine a user's availability on the IMS network 2 without having to request this information from the IMS network 2 (e.g. from the S-CSCF 5 or the HSS server 6).

In more detail, referring to Fig. 9, when a user logs on to the IMS network, the gateway 1 ("S7IG") is notified by the IMS network of this fact (Step 2: receive SIP Register). The gateway constructs an SS7 Alert message through address mapping the SIP URI to an MSISDN. The gateway holds a preconfigured list of one or more SMSCs (only one being shown, for clarity) to send the Alert to. The gateway will subsequently inform the SMSCs by sending an Alert message (Step 3: send MAP-ALERT-SERVICE-CENTRE) that will trigger the delivery of pending messages in the SMSCs for the user. The SMSCs will send back an Alert response (Step 4: receive MAP-ALERT-SERVICE-CENTRE response). The gateway subsequently sends a positive acknowledgement to the IMS network 2 (Step 5: Send 200 OK).

In another embodiment, the gateway 1 dynamically maintains the list of one or more SMSCs by intercepting and monitoring Report-SM messages (MAP-REPORT-SM-DELIVERY-STATUS), sent by the SMSCs towards the HLR 12. The gateway 1 maintains the list by using the MSISDN and SMSC information of the Report-SM messages to build user-specific SMSC Alert lists. Once the gateway 1 has updated its list of SMSCs to alert, the gateway 1 will relay the Report-SM message to the HLR it was destined for. When an IMS user logs on to the IMS network, the gateway 1 then uses the user-specific SMSC Alert list to determine which SMSCs to alert.

In the above embodiments, the list of SMSCs can variously contain SMSCs in a foreign network or SMSCs in the home network.

In this embodiment (indeed in most of the preceding embodiments), the recipient is a user device, however the recipient may alternatively be an IMS application, in which case the S7IG Gateway operates in a very similar manner with the only substantial difference being that the protocol conversion (including address mapping) is determined by the application access protocol involved.

Such application access protocols (e.g. SIP, MM7, SMPP), through which the gateway is capable of making IMS applications accessible are within the scope of the IMS overlay network.

It will be appreciated that the invention provides interworking in a manner which is completely transparent to the user. Also, the interworking is versatile and involves minimal upgrade of existing network elements. Further, as voice traffic is kept separate from the message interworking, this provides a major improvement for QoS.

The invention is not limited to the embodiments described but may be varied in construction and detail.

## Claims

1. A method of performing message interworking between on one side an IMS overlay network (2) and on the other side a circuit switched PLMN home network (10) associated with said IMS overlay network (2) or a circuit switched PLMN foreign network, the method comprising the steps of:
intercepting a routing request sent by a sender SMSC in the foreign network or in the home network, the routing request concerning a recipient potentially available on the IMS overlay network, the recipient being a user device or an IMS application;
a gateway (1) processing the intercepted routing request and determining accordingly if the recipient is available on the IMS overlay network (2);
if the recipient is not available on the IMS overlay network (2), the gateway returning the intercepted routing request to the home network (10); and
if the recipient is available on the IMS overlay network (2), the gateway (1) responding to the intercepted routing request, and subsequently receiving a message for the recipient, performing protocol conversion, and delivering a converted message to the recipient in the IMS network (2).

2. A method as claimed in claim 1, wherein the gateway communicates with the home network (10) or the foreign network (18) without updating a HLR (12) of the home network.

3. A method as claimed in claims 1 or 2, wherein the gateway (1) communicates with the home network (10) or the foreign network (18) at the SS7 level.

4. A method as claimed in any of claims 1 to 3, wherein the routing request is intercepted by altering an original routing request, and the gateway receiving the altered routing request and undoing the alteration if the routing request is to be returned to the home network (10).

5. A method as claimed in claim 4, wherein said alteration is alteration of a network routable address.

6. A method as claimed in claim 5, wherein one or more characters are added to an SCCP CdPA after an E.164 country code.

7. A method as claimed in any of claims 4 to 6, wherein the request is altered by altering a translation type of the original routing request.

8. A method as claimed in any of claims 4 to 7, wherein an element in the home network (10) alters the original routing request and directs the altered routing request to the gateway (1).

9. A method as claimed in claim 8, wherein the element is an STP (15) in the home network (2)

10. A method as claimed in any preceding claim, wherein the gateway responds to the intercepted routing request by inserting an address of the gateway (1) as an MSC parameter or an SGSN parameter in a response message.

11. A method as claimed in any preceding claim, wherein the gateway (1) sends a circuit switched PLMN network acknowledgement to the sender SMSC after delivering or attempting delivery of the message in the IMS overlay network (2).

12. A method as claimed in any preceding claim, wherein the gateway (1) determines dynamically in response to receiving the intercepted routing request if the recipient is registered in the IMS overlay network (2) by querying the IMS overlay network.

13. A method as claimed in claim 12 wherein the gateway (1) queries a HSS of the IMS overlay network.

14. A method as claimed in claim 12 wherein the gateway (1) queries a presence server of the IMS overlay network.

15. A method as claimed in claim 12 wherein the gateway queries an S-CSCF of the IMS overlay network.

16. A method as claimed in any preceding claim, wherein the gateway maintains subscriber IMS overlay network coverage data in a database.

17. A method as claimed in any preceding claim, wherein the gateway (1) receives coverage data in the form of a notification of a user device or an IMS application being available on the IMS overlay network (2), and informs at least one SMSC (11) by sending an alert message to trigger delivery of messages pending.

18. A method as claimed in claim 17, wherein the gateway (1) holds a list of one or more SMSCs and transmits said alert message to SMSCs in said list.

19. A method as claimed in claim 18, wherein said list is pre-configured.

20. A method as claimed in claim 18, wherein said list is dynamically maintained.

21. A method as claimed in claim 20, wherein said list is dynamically maintained by the gateway monitoring delivery status reports sent by an SMSC to a HLR.

22. A method as claimed in any of claims 17 to 21, wherein the gateway (1) receives said notification in the form of a SIP register message.

23. A message interworking gateway comprising means for performing gateway operations of a method as claimed in any preceding claim.

24. A computer readable medium comprising software code for performing operations of a method as claimed in any of claims 1 to 22 when executing on a digital processor.
